# EUROPEAN PATENT APPLICATION

(11) **EP 4 338 926 A2**
(43) Date of publication of application: **20.03.2024**
(21) Application number: 24155885.7
(22) Date of filing: 29.03.2018
(51) Int. Cl.: B29C 45/76

(54) **DUAL SIGNAL ADDITIVE FEEDING METHOD**

(30) Priority: 29.03.2017 US 201762478276 P; 17.01.2018 US 201815873200
(62) Divisional of application: 18776185.3
(71) Applicant: Maguire Products, Inc., Aston, PA 19014 (US)
(72) Inventor: MAGUIRE, Paul, Thornton 19373 (US)
(74) Representative: Harrison IP Limited

(57) **Abstract**

An injection molding machine is disclosed that comprises a barrel; a rotatable screw residing within the barrel and being longitudinally movable therewithin; and a liquid color pump for furnishing liquid color to the screw within the barrel. The machine further comprises a transducer for sensing position of the rotatable screw within the barrel and providing a signal indicative thereof; and a processor receiving the signal and controlling pump speed according to sensed position of the screw.

## Description

### Background of the Invention

This invention relates to addition of additives in the course of manufacture of molded plastic parts, and particularly to addition of additives to resin at the throat of an injection molding machine, preferably using a mechanical feeder.

Feeders like this have been around for at least sixty years. In the last twenty years, gravimetric feeders have become popular. They employ load cells and some computer control to meter color into the process, measuring weight to maintain accuracy.

What all feeders have had in common is one thing. They all respond to a signal that comes from the injection molding machine when the feed screw is turning.

### Description of the Prior Art

Injection molding is well known. The prior art relating to injection molding is plentiful. The United States patents that are incorporated by reference herein, as set forth above, are representative of the current prior art as respecting injection molding.

Injection molding machines follow the following sequence:
1. The mold closes.
2. The screw, inside the heated barrel, is driven forward to "inject" a pre set volume of melted plastic into the mold.
3. A short time is allowed to pass, called "injection hold" time. This allows some cooling to occur.
4. The screw is signaled to rotate, driving molten plastic forward, into the space in front of the screw. Filling that space builds pressure in front of the screw, causing the screw to retract.
5. When the screw retracts to a pre- set point, a sensor signals the screw to stop. This sensor is movable and its position determines the size of the shot that is now ready for the next injection cycle.
6. The mold cools for a set time. Then it opens and the cooled solidified part is ejected.
7. The cycle repeats.

In the course of the injection molding process oftentimes additives are added to the resin to facilitate and enhance the molding process. Such additives include lubricants, mold release agents, blowing agents, light stabilizers, nucleating agents, anti- static agents, antioxidants, colorant and others.

Color is frequently added to resin to provide colored plastic products. Sometimes the color is in the form of pellets that are highly loaded with pigment. Typically, when solid, pelletized colorants are used, the colorant pigments might be added at a rate of 2% to 4% by volume of the natural, uncolored resin material.

Use of liquid color to color injection molded finished and semi- finished plastic parts is also well known. The prior art relating to liquid color is largely concerned with handling and storing the liquid color prior to the actual use of the liquid color in an injection molding process.

When adding color to the process, it is common to add the color at the "throat" of the extruder screw. This is where the raw resin material enters from the hopper above. It has always been the practice to add the color at the same time the screw runs. The turning screw draws in the virgin resin material, and this is the ideal time to also add colorant, so that the two are being metered at the same time and an even distribution of color to natural material is achieved.

When liquid color is used, the liquid color may typically be added at a rate of about 1½% to 1% by volume of the resin material. The liquid color, which is typically a mix of single color pigment dispersions, may be blended together with the resin pellets in a gravimetric blender, or may be metered directly into the throat of a process machine such as an injection molding press or an extruder.

To coordinate the color feed to the machine screw requires a signal from the injection machine to tell when the screw is turning. All at-the-throat color feeders work this way.

Virgin resin pellets are typically a light brown, neutral color.

United States patents 7,390,119; 7,416,096; 7,958,915; 7,980,834; 8,757,217; 8,800,821; and 9,188,118; 9,637,283; 9,708,462; 9,769,123; 9,815,036; 9,841,010; and 9,850,888 are all concerned with handling and supply of liquid color in connection with injection molding and/or extrusion, as are published United States patent applications 2015/0066794 A1; and 2015/0233756 A1.

When liquid color is metered into the throat of a process machine, where a rotating screw "works" the resin material into a molten blend ready for extrusion or molding, the liquid color must be metered at the same rate as the resin pellets entering the process machine throat and contacting the rotating screw so that the liquid color is more or less uniformly distributed throughout the blend of molten plastic material. Mixing of the liquid color with the resin occurs in the heated barrel of the injection molding or extrusion machine, by the action of the rotating screw inside the bore of the barrel. This action of the rotating screw, with the screw thread "working" the resin pellets, serves to melt the resin pellets and blends the liquid color with the virgin resin material. Additionally, the screw, in the case of an injection molding machine or an extruder, conveys the resulting molten material mixture forward towards the mold or an extrusion dye.

While "screw" rotation signal is used as standard respecting additive addition, "injection" signal is never suggested or anticipated for use as a signal. Both have not been used together in a coordinated effort to meter all of the color uniformly over the full flow of natural material.

### Summary of the Invention

In one of its several aspects, this invention provides a method for injection molding colored plastic parts where the method includes the steps of furnishing granular polymeric resin material (which may be virgin resin material, regrind, a mixture of the two, etc.) to a rotatable longitudinally reciprocable screw, rotating the rotatable reciprocable screw to work the granular polymeric resin material into a viscous, molten state, furnishing liquid color to the rotating reciprocable screw at a first rate, driving the rotatable reciprocable screw longitudinally from a first position to a second position to force the viscous, molten polymeric resin material ahead of the rotatable reciprocable screw into a mold while continuing to furnish liquid color to the screw at a second rate, and retracting the rotatable reciprocable screw longitudinally from the first position to the second position while still continuing to furnish granular polymeric resin material to the screw.

In another of its aspects, this invention provides an injection molding machine, having a barrel, a rotatable screw residing within the barrel and being longitudinally reciprocably movable therewithin, a liquid color pump for furnishing liquid color to the rotatable reciprocable screw within the barrel, a transducer for sensing position of the rotatable reciprocable screw within the barrel and providing a signal indicative thereof to a processor, which receives the signal and controls liquid color pump speed and output according to sensed position of the rotatable reciprocable screw.

In yet another of its aspects, this invention provides a method for injection molding colored plastic parts that includes furnishing resin material to a screw barrel having a rotatable screw therewithin, rotating the screw to work the resin material into a molten state, furnishing liquid color to the screw barrel interior at a first rate during screw rotation, and driving the screw longitudinally from a first position to a second position to force the liquid color-resin material mixture resulting from screw rotation into a mold while furnishing liquid color to the screw barrel interior at a second rate. The liquid color is desirably furnished to the screw barrel interior via the throat through which the resin material is furnished to the screw. Alternatively, liquid color may be furnished to the screw barrel interior at a position displaced from where the resin material is furnished to the screw barrel.

The second rate of furnishing of liquid color to the screw barrel interior is preferably greater than the first rate.

This method aspect of the invention may further include controlling the rate of furnishing liquid color based on the rotation of the screw, or based on position of the screw, or based on process cycle time, or some combination thereof.

In yet another of its aspects, this invention provides an injection molding machine having a barrel, a rotatable screw residing within the barrel and being longitudinally movable therewithin, a liquid color pump for furnishing liquid color to the screw within the barrel, a transducer for sensing position of the rotatable screw within the barrel and providing a signal indicative of that position and a processor receiving the signal and controlling liquid color pump speed according to sensed position of the screw.

In still yet another one of its aspects, this invention provides a method for supplying an additive such as a colorant to an injection molding machine having a rotatable reciprocable screw within a barrel where the inventive improvement includes furnishing the additive to the injection molding machine barrel at a first rate during screw rotation and at a second rate during material injection.

Injection molding machines operate with a continuous, cyclical process, with one set of plastic parts being molded during each cycle of the process. The material, namely the resin pellets and whatever colorant and/or other additive(s) is being used, whether liquid or solid, is preferably pulled into the barrel when the screw is turning. The screw rotates only long enough to prepare the mixture, by transforming it into a viscous molten state, for the upcoming "shot" of material into the mold.

Known color and other additive metering devices, namely devices that meter colorant and/or other additives into the throat of an injection molding machine, include a transducer that signals when the machine screw is turning. By noting when the screw is "on" or "turning" and hence also when the screw is "off or "not turning", the metering device can meter color and/or other additive(s) into the screw barrel for the upcoming shot during "screw return time", namely as the screw is rotating and returning from forcing a "shot" of molten thermoplastic material into the mold. Metering in the correct amount of color and/or other additive(s) for the upcoming shot during "screw return time", namely with the additive, such as color, being provided at the throat of the barrel while the screw is rotating and "working" the resin material/mixture into a molten state, assures reasonably uniform distribution of the colorant or other additive throughout the resin in most cases, as the screw rotates and draws the resin material along the interior of the barrel (within which the screw resides) of the injection molding machine, in preparation for the next "shot". "Screw return time" is the time during which the screw is turning, making the resin material viscous and molten in preparation for the next "shot". During this time the screw is moving away from the mold as the screw is displaced by the viscous molten material while the screw thread "works" the resin material into a viscous, molten state.

Such metering of colorant at the throat and coordinating the metering with the "screw return time" is the process by which liquid color pumps have operated since the introduction of liquid color to the injection molding industry.

Because liquid color, like paint or tar, can be quite messy and is very viscous, the usual practice is to introduce the liquid color directly into the machine barrel throat, namely the opening in the barrel via which the granular resin material is fed into the barrel to be "worked" and transformed into a molten material by the screw. Feeding liquid color into the throat minimizes contamination of other machine parts such as hoppers, blenders, and conveying equipment.

Typically, color concentrate feeders that meter solid colorants into the throat of injection molding machine barrels follow the same process procedure, running concurrently with screw "on" time and requiring a screw "on" signal for timing and control of the speed of feeding of the solid colorant material.

In addition to rotation of the screw "working" the resin material into a molten state and as a byproduct mixing the molten resin material with colorant, the screw also serves to inject the molten resin material into the mold in the actual molding operation. Injection of the molten plastic material into the mold is done by driving the screw forward in the barrel of the injection molding machine. This forward motion of the screw drives molten material residing in front of the screw into the cavities of the mold. There is preferably a check valve mounted on the tip of the screw so that what was resin, and is now viscous molten material that has been injected into the mold, cannot slip back over the screw in a direction away from the mold. Due to the operation of the check valve, the viscous molten material is driven forward as the screw moves forward and "injects" the viscous molten material into the cavities of the mold.

Once injection is complete, the screw commences rotating, pulling more granular resin material into the barrel of the injection molding machine. Rotation of the screw melts, mixes, and transports the resulting blend of resin material, and any additive(s), forward due to the action of the screw thread. As the screw rotates, the screw is forced backwards in the barrel as the screw pushes more and more viscous molten material towards the front and eventually out in front of the end of the screw, due to the rotation of the screw and the effect of the screw thread. The molten material, which is pushed out in front of the screw by action of the screw thread, fills the space in front of the screw. The screw retreats while the screw rotates, due to force applied to the screw by the viscous molten material filling the space. As more and more viscous, molten material is pushed into the space in front of the screw, the rotating screw is pushed backwards, away from the mold, by the viscous, molten material, which the rotating screw has just forced into position ahead of the screw.

As a result, in simple language, the process is a two-step process. The first step being to inject the viscous, molten material into the cavities of the mold. The second step being to rotate the screw to draw in and "work" more resin material, colorant and/or any other additive(s) thereby to fill the space in front of the screw for the next injection of viscous, molten material into the mold cavities.

In another of its aspects this invention provides an injection molding press for injection molding resin into plastic parts where the press includes the barrel having a throat for resin feed into the barrel, a rotatable longitudinally movable screw within the barrel, a first sensor providing a signal indicative of screw rotation, a second sensor providing a signal indicative of screw longitudinal advancement as the screw injects molten resin material into the mold, and a feeder providing additive(s) to the resin at the throat during resin feed into the barrel in response to the first sensor signal and thereafter in response to the second sensor signal. The press desirably further includes a second sensor providing a signal indicative of screw longitudinal advancement as the screw injects molten resin into the mold with the second sensor also providing indication of screw position and any change in screw position while molten resin material is cooling in the mold. The second sensor desirably is indicative of screw longitudinal advancement injecting molten resin into the mold and cessation of such advancement by the screw. The feeder desirably apportions the addition of additive in time in response to the two signals provided by the two sensors. The press desirably includes a processor receiving the first sensor signal, recording the time duration of screw rotation, and based thereon computing time for screw injection of molten resin into the mold while controlling the feeder to regulate the rate of additive addition during screw rotation and during injection.

In still another one of its aspects, this invention provides a method of providing additive, such as liquid color, solid colorant, lubricant, mold release agent, blowing agent, light stabilizers, nucleating agents, antistatic agents, antioxidants, and the like, to an injection molding machine where the method includes rotating the machine screw while concurrently feeding resin and additive(s) into the screw barrel through the barrel throat at first selected rate. Rotation of the screw converts the resin-additive mixture into molten material and drives the molten material forward into space in front of the screw. The molten material fills the space, with build-up pressure from the molten material collecting in the space ahead of the screw causing the rotating screw to retract longitudinally. The method proceeds by halting screw rotation upon the screw retracting to a pre- selected position. The method further proceeds with driving the screw longitudinally forward thereby injecting the molten resin material into the mold while concurrently feeding resin and additive at a second selected rate into the barrel throat. The method desirably further includes allowing molten resin material in the mold to cool, at least to some extent.

In yet still another one of its aspects, this invention provides a method of providing additive to an injection molding machine where the method includes feeding the additive at a first selected rate together with resin into the screw barrel through the barrel throat while the screw is rotating. The method proceeds by rotating the machine screw with rotation of the screw converting the additive and resin into molten material and driving the molten material forward into space in front of the screw, thereby filling the space with molten material. Pressure from the molten material on the screw in the space at the front of the screw causes the rotating screw to retract. The method proceeds with halting screw rotation once the screw has retracted to a pre- selected position. The method yet further proceeds with filling additive at a second selected rate together with resin into the barrel through the throat while driving the screw forward thereby injecting a pre-selected volume of molten material into the mold. The method further proceeds desirably and optionally by continuing filling additive at the second selected rate together with resin into the barrel through the throat while allowing the molten material in the mold to cool. The method may conclude by opening the mold for removal of solidified plastic.

In the practice of the method, the second rate is desirably a continuously calculated percentage of the first rate.

In a further one of its aspects, this invention provides a method for operating an injection molding machine for molding granular resin into solid plastic parts where the machine includes a barrel having a throat for resin feed into the barrel, a rotatable longitudinally movable screw within the barrel and a feeder at the throat providing additive to the resin. The method includes the steps of feeding the resin-additive mixture into the barrel through the throat, rotating the screw thereby converting granular resin and additive into molten material collecting in the barrel at a mold end of the screw while the screw retreats longitudinally due to force exerted on the screw by molten material collecting ahead of the screw in the barrel at the mold end. The method further proceeds by longitudinally advancing the screw thereby injecting molten material collected ahead of the screw end into the mold. The method further proceeds by maintaining the screw at the longitudinally advanced position for time to allow at least some cooling of molten material in the mold. The method includes the improvement comprising recording the time for performance of the step of rotating the screw to convert granular resin material and additive into the molten material, determining the time for performance of the steps of advancing the screw to inject the molten material into the mold and maintaining the screw in an advanced position to allow for at least some cooling of molten material in the mold and thereafter proceeds with apportioning the amount of additive provided to the resin according to the times determined pursuant to the proceeding steps.

In a yet further one of its aspects, this invention provides a method for operating an injection molding machine from molding granular resin into solid parts where the machine includes a barrel having a throat for resin feed into the barrel, a rotatable longitudinally movable screw within the barrel and a feeder at the throat providing additive to the resin. The method proceeds with feeding the resin-additive mix into the barrel through the throat. The method goes on by rotating the screw thereby converting granular resin material and additive into molten material collecting at a mold end of the barrel while the screw retreats longitudinally due to force exerted on the screw by molten material collecting in the barrel at the mold end. The method further proceeds by longitudinally advancing the screw thereby injecting molten material collected at the screw mold end into the mold. The next step of the method involves maintaining the screw at the longitudinally advanced position for time sufficient to allow at least some cooling of the molten material in the mold. The method then proceeds by measuring the time for the screw to retreat longitudinally while rotatably converting the resin-additive mixture to molten material and then measuring the time for screw longitudinal advancement as the molten material in injected and optimally including at least some time for molten material cooling, and thereafter regulating the feeder providing additive to the resin at the throat in response to the times measured in the course of performance of the preceding steps.

In still another one of its aspects this invention provides a method for controlling a feeder furnishing an additive to an injection molding press, which is molding granular resin into solid plastic parts, where the press includes a barrel having a throat for resin feed into the barrel, a rotatable longitudinally movable screw within the barrel, with the feeder being located at the throat of the press for contributing an additive to the resin to produce a resin-additive mix fed into the barrel of the press. The method includes feeding the resin-additive mix into the barrel through the throat, rotating the screw thereby converting the resin-additive mix into molten material collecting at the mold end of the barrel while the screw retreats longitudinally due to force exerted on the screw by molten material collecting at the mold end of the barrel. The method then further proceeds by longitudinally advancing the screw thereby injecting molten material collected at the screw end into the mold. The method further proceeds by maintaining the screw at the longitudinally advanced position for time sufficient to allow at least some cooling of the molten material in the mold, whereupon the method proceeds to repeat. The method further includes the improvement of recording a time for performance of the screw rotation, determining the time for performance of screw injection of the molten material into the mold and for optional maintenance the screw at the longitudinally advanced position for time to allow some cooling of molten material in the mold, and thereafter regulating the feeder to apportion the amount of additive added to the resin during screw rotation and during molten material injection according to determined times. Regulation of the feeder may be based on time recorded for the screw rotation providing the molten material at the screw mold end ready for injection. The method may further include measuring the time for performance of injection and optionally maintaining the screw at the advanced position to allow some cooling of material in the mold. The method may further proceed by calculating the times for injection and screw rotation to control feeding of the additive by the feeder to the injection molding press throat together with the resin.

### Technical Advances Provided by the Invention

A problem that has been ignored for years, which has now been recognized and solved by the instant invention, relates to the amount of resin material drawn into the barrel, at the barrel throat, by forward movement of the screw during the injection step of the injecting molding process. While it seems logical and intuitive that material is drawn in only when the screw turns, this is not actually the case. It also happens that during injection, while the screw is moved forward to inject the plastic into the mold, the rear of the screw is also moving under the throat. The empty flights at the rear of the screw are now filling with material, drawing a significant additional amount of natural material into the barrel. When the screw then rotates driving material forward, it also retracts as the screw flight pushes material forward, and drives the rear portion of the screw and screw flight, back well behind the throat. The screw flight to the rear of the throat is now empty, and again, on the next injection cycle, it will move forward drawing in material again from the hopper.

The resin portion of the entire shot of resin that is pulled in during injection is approximately twenty-five percent of the overall shot weight. When molding plastic resin this twenty-five percent enters the barrel without color or another additive being metered into it. The only reason this goes unnoticed is that the screw does a great job of mixing so that the uneven distribution of resin and color or another additive is eventually blended together well enough to not be an issue in the final product.

In color molding, the lack of even distribution of color into the blend has been mostly ignored for the sixty plus years that at-the-throat metering has been offered to customers. However, when the part being molded is very large, and the material being injected may be more than half of all the material that resides in the screw at any time, then the lack of even color distribution is often noticed in the finished part, the finished part have light areas of too little color, alongside darker areas of too much color.

Typically about twenty-five percent of the resin material for each molding "shot" is drawn into the barrel as injection into the mold occurs. The remaining seventy-five percent of the resin material is drawn into the barrel during screw rotation as the screw rotates and is displaced backwards by the molten plastic material gathering in front of the screw due to the action of the screw thread on the resin material. Until now, metering equipment that meters liquid or solid color or other additive(s) directly into the throat has metered material only during screw rotation. As a result, approximately twenty-five percent of the resin material is drawn into the screw barrel (during injection of a "shot") without any colorant or other additive being added as the resin material is drawn into the barrel. This discontinuity or interruption in the supply of colorant or other additive(s) to the injection molding machine, and specifically to the interior of the machine barrel, nearly always goes unnoticed. This is because, as noted above, the screw does a good job of mixing material in the barrel; in the case of a color additive, the finished molded plastic products usually appear to be uniform in color, despite the fact that colorant, whether liquid or solid, has been added only during rotation of the injection molding machine screw.

Whether the problem is noticeable or not, it is still a problem that should be solved. When injection molding colored products, color distribution is important and operating in a way that knowingly meters one-hundred percent of the required color into only seventy-five percent of the natural material is clearly not the best way to operate. The continuous push for lower cost molding processes and lower cost molded products has resulted in an emphasis being placed on color and other additive(s), metering accuracy and uniformity of such metering to assure even distribution of color and/or other additive(s) over the machine cycle. To provide accurate and uniform metering of such additive(s) on a precise basis is difficult if not impossible when about twenty- five percent of the resin material that is drawn into the barrel in the course of each molding cycle receives no additive at all.

The solution to this problem is to add an additional signal to the controls. The injection signal can tell the feeder to start metering when injection occurs. Because the injection signal moves the screw forward in a relatively short time, and then "holds" that full forward position for an additional period, the invention needs to approximate the time that actual injection occurs. In one of its aspects the invention defaults this time to thirty percent of screw recovery time, however, parameters are available to alter this time period to match actual measured time. This invention in some of its aspects, also assumes that twenty-five percent of the shot weight will enter the barrel during injection. This setting can also be altered to match the exact characteristics of the injection molding machine screw design.

Even given slight variations in screw design and screw injection time as a percent of screw retraction time, it is clearly better to make a calculated attempt to get the feed rate correct, then to do nothing at all.

In one of its aspects, this invention addresses the problem of accurate, uniform metering of additives to an injection molding screw. Specifically, in one context the invention adds an injection signal input to the additive feeder in the solid additive situation or to the metering pump in the liquid additive situation so that the feeder or pump runs during injection as well as during screw rotation, thereby providing about twenty-five percent of the additive as resin material is supplied to the screw during injection of the "shot" of the molten plastic material into the mold and then providing about seventy- five percent of the additive during screw "recovery" time when the rotating screw is drawing in the remaining seventy-five percent of the resin material. In one practice of the invention on every cycle, the screw recovery time is recorded. If it were to gradually change the invention follows that change, recording a new time every machine cycle.

Based on screw recovery time, the invention calculates injection time to be a percentage of screw recovery time. Typically thirty percent of the injection time is the screw recovery rate.

The invention then apportions the color or other additive to be metered to these two times. Injection will receive twenty- five percent of the required color or other additive. Screw recovery will receive the remaining seventy- five percent of the required color or other additive.

Each dispense runs at the proper rate to match color or other additive dispenses within the same time that has been calculated to be available. A computer-controlled stepper motor portion of the additive feeder can do this with precision.

Plastic resin material drawn into the barrel during injection typically enters the barrel at a rate about three times higher than during screw "recovery", namely while the screw is rotating and displacing material to the front of the screw, thereby forcing the screw away from the mold. As a result, the metering of additive, in the course of practice of one aspect of the invention, is regulated to occur at an appropriate higher rate while material is being drawn into the screw barrel during injection, than the additive metering rate during screw "recovery", namely during screw rotation and resulting screw movement longitudinally away from the mold cavity. Both the percentage of material drawn in during injection, as well as the time required for full supply of additive to result, are parameters to be adjusted if necessary in the course of practice of one aspect of the invention. The invention preferably incorporates an "at the throat" additive metering device, most desirably a Maguire Products MGF feeder, receiving both screw injection and screw rotation signals thereby to meter additive to the injection molding machine and specifically to the injection molding machine screw within the machine barrel, at greater accuracy and uniformity than known heretofore.

### Brief Description of the Drawings

Figure 1 is a schematic sectional view in elevation of an injection molding machine with the screw at an advanced position, having forced viscous, molten resin material into the cavities of a mold.
Figure 2 is a schematic section view in elevation of the injection molding machine shown in Figure 1 where the screw has moved to the right in the drawing, away from the mold, ito a retracted position as the screw has rotated and filled the space between the front of the screw and end of the screw barrel with molten material. The screw is in position ready to move to the left to advance viscous, molten polymeric resin material residing in front of the screw into the cavities of the mold.
Figure 3 is a schematic sectional view in elevation of an injection molding machine with an additive feeder in position to supply additive to resin entering the feed throat of the injection molding machine.

### Description of the Invention and Implementation of the Same

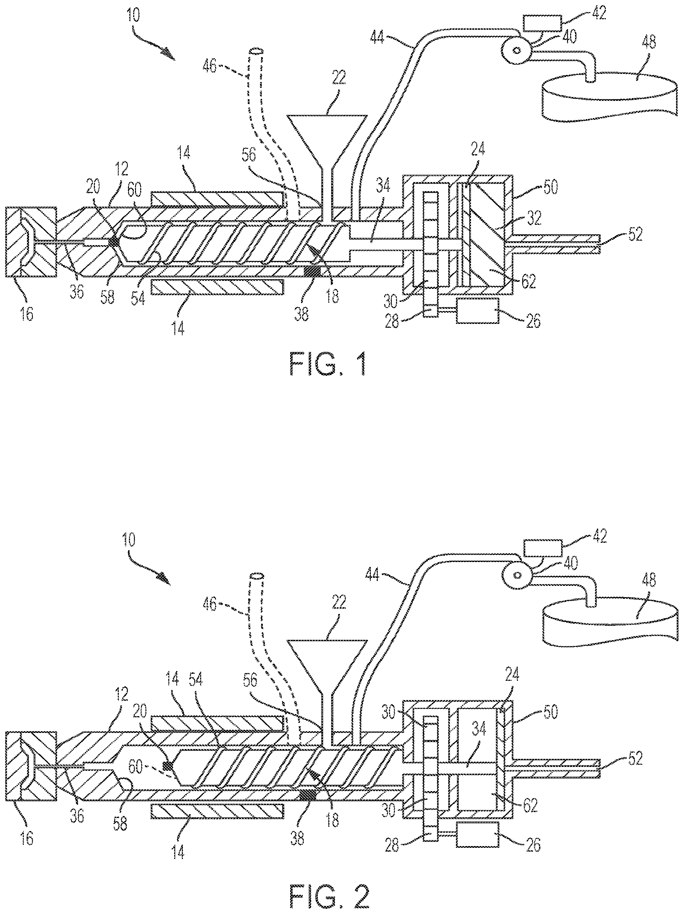

Referring to the drawings, in Figure 1 an injection molding machine is denoted generally 10. Injection molding machine 10 includes a barrel 12 of generally cylindrical configuration with a heater 14 wrapped about barrel 12. A mold 16 is located at one end of barrel 12 and receives molten thermoplastic material provided by action of a rotatable, longitudinally reciprocable screw 18. Mounted at the end of screw 18 close to mold 16 is a check valve 20.

A hopper 22 is provided to hold and supply granular resin material to be molded by molding machine 10, with the granular resin material being supplied to the interior of barrel 12. Rotatable reciprocable screw 18 has a shaft portion 34 which extends out of barrel 12, at the end of barrel 12 opposite from mold 16. Shaft 34 has a driven gear 30 mounted thereon. A drive gear 28 meshes with driven gear 30. Drive gear 28 is rotatably driven by a motor 26. The end of shaft 34 remote from mold 16 is connected to a ram 24, which reciprocates within a housing 50.

Ram 24 is hydraulically driven from right to left in Figure 1, thereby moving rotatable reciprocable screw 18 longitudinally from the position illustrated in Figure 2 to the position illustrated in Figure 1. In that regard, it is to be understood that Figure 1 illustrates the position of screw 16 at the completion of a "shot", namely upon completion of filling the cavities within mold 16 with viscous molten resin material with that material reaching those cavities from the interior of barrel 12 via passageway 36 in the end of barrel 12.

In Figures 1 and 2, a liquid color pump is depicted schematically and designated 40. Pump 40 is controlled by a processor 42. A storage drum for liquid color is designated 48 with an unnumbered conduit being provided for pump 40 to draw liquid color out of drum 48. Pump 40 supplies liquid color through a conduit 44 to the interior of barrel 12.

The position at which conduit 44 communicates with the interior of barrel 12 is not critical. An alternate position for conduit 44 to communicate with the interior of barrel 12 has been indicated in dotted lines as an alternate conduit 46 in the drawings. A further alternate and preferred position for conduit 44 to communicate with barrel 12 is at throat 56, where hopper 22 empties into barrel 12. This configuration is not illustrated in Figure 1 or in Figure 2.

Ram 24 resides within a housing 50 and is movable therewithin, back and forth between the positions illustrated in Figure 1 and Figure 2. Ram 24 moves to the position illustrated in Figure 1, which is to the left with respect to the interior of housing 50, in response to high pressure hydraulic fluid 32 supplied to the interior of housing 50 via passageway 52.

Injection molding machine 10 preferably runs continuously, with reciprocable rotating screw 18 moving back and forth and rotating to supply viscous, molten resin material to mold plastic parts in the cavities of mold 16. Granular polymeric resin material is fed into the interior of barrel 12 by downward flow of granular polymeric resin material from hopper 22. Optionally and desirably, a valve may be provided to shut off downward flow of granular polymeric resin material from hopper 22; such a valve has not been illustrated in the drawings to enhance drawing clarity.

Screw 18 is rotatably driven by a motor 26 via a drive gear 28 meshing with a driven gear 30. Driven gear 30 is fixedly mounted on shaft 34 of rotatable reciprocable screw 18. A single "shot" of viscous, molten resin material filling the cavities in mold 16 may be considered to commence with rotatable, reciprocable screw 18 at the position illustrated in Figure 2 of the drawings. With rotatable reciprocable screw 18 at the position illustrated in Figure 2, a ram 24 affixed to an end of screw shaft 34 remote from the screw flight 54 of rotatable reciprocable screw 18 is in the position illustrated in Figure 2. When rotatable reciprocable screw 18 is at the position illustrated in Figure 2, rotatable reciprocable screw 18 has rotated and "worked" the polymeric resin material supplied from hopper 22 so that the interior volume of barrel 12 is filled with viscous molten polymeric resin material. Ram 24 is then moved by application of hydraulic fluid pressure thereto by pumping hydraulic fluid through a passageway 52 formed in housing 50, with the hydraulic fluid being under high pressure. The high pressure hydraulic fluid moves ram 24 and rotatable reciprocable screw 18 to the left in Figure 2, to the position illustrated in Figure 1.

The leftward movement of rotatable reciprocable screw 18 along the interior of barrel 12 forces the viscous, molten material out of the interior of barrel 12, through passageway 36, and into mold 16, specifically into the cavities of mold 16.

Check valve 20, affixed to the end of rotatable reciprocable screw 18, prevents back flow of any viscous molten material from mold 16 into the interior of barrel 12 when rotatable reciprocable screw 18 is at the longitudinally advanced position illustrated in Figure 1.

Desirably, rotatable reciprocable screw 18 is maintained at the longitudinally advanced position illustrated in Figure 1 only for such time as required for the viscous, molten thermoplastic resin material in mold 16 to harden sufficiently so that there is no back flow into the interior of barrel 12.

Rotatable reciprocable screw 18 then rotates, being rotatably driven by motor 36; such rotation serves to "work" granular resin material entering barrel 12 from hopper 22 into a viscous molten state. The thread 54 of rotatable reciprocable screw 18, "works" and advances the granular resin material to the left in Figures 1 and 2 with such working raising the temperature of the material whereupon it transforms into a viscous, molten state. As rotatable reciprocable screw 18 continues to turn, with screw thread 54 working and forcing the molten plastic material forward, namely to the left in Figures 1 and 2, rotatable reciprocable screw 18 is displaced to the right from the position illustrated in Figure 1 to the position illustrated in Figure 2 as more and more granular resin material is transformed into a viscous, molten state and fills space between end 60 of rotatable reciprocable screw 18 and the shaped end portion 58 of the interior portion of barrel 12. Once the molten material has filled space between end 60 of rotatable reciprocable screw 18 and shaped end portion 58 of the interior of barrel 12, and rotatable reciprocable screw 18 has been displaced to the position illustrated in Figure 2, the cycle repeats itself with rotatable reciprocable screw 18 moving to the left in response to the force of ram 24 produced by high pressure hydraulic fluid filling cavity 62 within housing 50.

During operation, injection molding machine 10 illustrated in Figures 1 and 2 proceeds with molding colored plastic parts by furnishing resin material to screw barrel 12 having rotatable reciprocable screw 18 therewithin. Molding machine 10 proceeds by rotating screw 18 to work the resin material into a molten state within screw barrel 12. Liquid color is furnished to the screw barrel 12 interior at a first rate during the rotation of screw 18. Screw 18 is driven longitudinally from a first position to a second position to force the viscous, molten color-resin material mixture, resulting from the rotation of screw 18, into mold 16 while furnishing liquid color to the interior of screw barrel 12 at a second rate. The liquid color is most preferably provided to the interior of screw barrel 12 via a throat 56 through which the resin material is furnished to screw 18 within screw barrel 12; this configuration has not been illustrated in Figures 1 and 2 to ensure drawing clarity. Alternatively, liquid color may be furnished to the interior of screw barrel 12 at a position displaced from where the resin material is furnished to the screw barrel, as illustrated by the positions at which conduits 44 and 46 connect with screw barrel 12 in Figures 1 and 2, as explained above.

Desirably, the second rate at which liquid color is supplied, namely during the injection of the "shot" into the mold, is greater than the first rate at which the liquid color is supplied, namely during rotation of rotatable reciprocable screw 18 within screw barrel 12.

A processor 42 controls the rate of furnishing liquid color and may do so based on rotation of screw 18, based on position of screw 18, based on cycle time of injection molding press 10 and screw 18 or based on a combination of these parameters. A transducer 38 senses position of rotatable screw 18 within barrel 12 and provides a signal indicative thereof to processor 42 for controlling pump speed according to either sensed position of the screw, or sensed rotation of the screw, or based on cycle time. Accordingly, transducer 38 may be of several different types, so long as transducer 38 is suitable for sensing the desired parameter(s) to be used for controlling supply of liquid color to the interior of screw barrel 12.

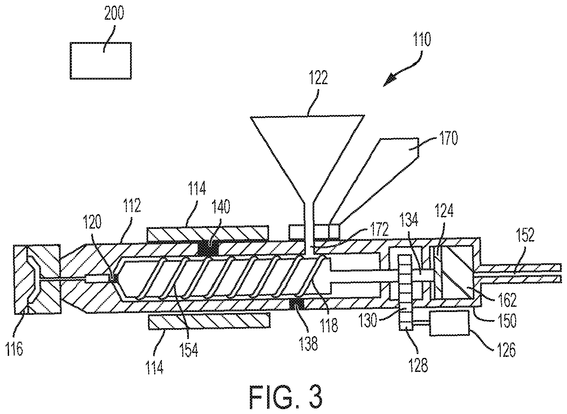

Once again referring to the drawings, in Figure 3 an injection molding machine is denoted generally 110 and is similar to injection molding machine 10 illustrated in Figures 1 and 2. Injection molding machine 110 in Figure 3 includes a barrel 112 of generally cylindrical configuration with a heater 114 wrapped around barrel 112. Heater 114 is optional. Still referring to Figure 3, mold 116 is located at one end of barrel 112 and receives molten thermoplastic material provided by the action of rotatable, longitudinally reciprocable screw 118. Mounted at the end of screw 118 close to mold 116 is a check valve 120.

A hopper 122 is provided to hold and to supply resin material to be molded by molding machine 110 with the resin material being supplied to the interior of barrel 112 via throat 172. Rotatable, reciprocable screw 118 has a shaft 134 extending out of barrel 112, at the end of barrel 112 opposite from mold 116. Shaft 134 has a driven gear 130 mounted therein, in much the same manner as illustrated in Figures 1 and 2.

Similarly to the injection molding machine illustrated in Figures 1 and 2, a drive gear 128 meshes with a driven gear 130. Drive gear 128 is rotatably driven by motor 126, as illustrated in Figure 3. The end of shaft 134 remote from mold 116 is connected to ram 124, which reciprocates within a housing 150 in a manner essentially identical to that described above and illustrated in Figures 1 and 2.

Ram 124 is hydraulically driven from right to left in Figure 3, thereby moving rotatable, reciprocal screw 118 longitudinally from a position remote where the end of screw 118 (the left end of screw 118 in Figure 3) is remote from mold 116. The reciprocable driving of screw 118 moves screw 118 to the position where the end of screw 118 more proximate mold 116 is essentially at the position illustrated at Figure 3. Similarly to Figure 1, screw 118 is rotatably driven by a motor 126 via a drive gear 128 meshing with a driven gear 130. Driven gear 130 is desirably fixably mounted on shaft portion 134 of rotatable, reciprocable screw 118.

Still referring to Figure 3, a single "shot" of viscous molten resin material filling the cavities in mold 116 may be considered to commence with rotatable, reciprocable screw 118 at a position similar to that illustrated in Figure 2 where ram 124 fixed to an end of screw shaft 134 remote from screw flight 154 is in a position similar to that illustrated in Figure 2. Much like the sequence of events illustrated in Figures 1 and 2, rotation of rotatable, reciprocable screw 118 in molding machine 110 illustrated in Figure 3 positions rotatable screw 118 at a position at which rotatable screw 118 has rotated and "worked" the mixture of polymeric resin material and additive(s) supplied from hopper 122 and feeder 170 so that the interior volume of barrel 112 is filled with the mixture of resin and additive(s), with the mixture having become molten due to the "working" of the mixture by screw thread 154. Ram 124 is then moved by application of hydraulic fluid pressure thereto by pumping hydraulic fluid through a passageway 152 formed in housing 150 with the hydraulic fluid being under high pressure. The high pressure fluid moves ram 124 and rotatable reciprocal screw 118 to the left in Figure 3.

Still referring to Figure 3, feeder 170 receives additive to be combined with resin stored in hopper 122 with the act of combining the additive with the resin preferably taking place in throat 172 leading immediately to the interior of barrel 112.

The rapid advancement of screw 118 required to force the molten mixture of resin and additive into the cavities of mold 116 is facilitated by rapid application of high pressure hydraulic fluid through passageway 152 to contact ram 124 and push ram 124 to the left in Figure 3 through space 162 to a position at which ram 124 has longitudinally traversed space 162 illustrated in Figure 3. The combination of ram 124 and chamber 162 are analogous to and operate much the same way as a piston within the cylinder of an internal combustion engine. However, of course, there is no combustion associated with operation of ram 124 within chamber 162 of injection molding machine 110 illustrated in Figure 3. Still referring to Figure 3, a first sensor 138, preferably positioned on or within barrel 112 provides a signal indicating rotation of screw 118. A second sensor 140, also preferably positioned in or on barrel 112, provides a signal indicative of longitudinal advancing screw 118 injecting the molten resin-additive mix into mold 116. The signal indicative of screw rotation provided by first sensor 138 and the signal indicative of screw longitudinal advancement injecting molten material into mold 116 provided by second sensor 140 are both desirably provided to a microprocessor 200. Transmission of the signals is desirably wirelessly accomplished using any one of the available wireless protocols for such signal transfer, including Bluetooth, the Internet, and the like. Microprocessor 200, while illustrated as a stand-alone component in Figure 3, may equally well be provided as a part of feeder 170, or may be part of injection molding machine 110 or may be an entirely standalone component.

One desirable arrangement is to have microprocessor incorporated into as a part of feeder 170. Whether microprocessor 200 is built into feeder 170 or controls feeder 170 from afar, feeder 170 apportions additive added to the resin material in response to the sensor signals received from first and second sensors 138, 140. Microprocessor 200, no matter where it is located and no matter the supplier/vendor of microprocessor 200, receives the first sensor signal from sensor 138, and records time duration of screw rotation. Microprocessor 200 thereafter computes time, based on the duration of screw rotation, for screw injection of the molten resin- additive mix into the mold and controls feeder 170 to regulate the rate of additive addition to the resin during screw rotation and during injection. In this way, microprocessor 200 and feeder 170 coordinate during machine operation, with screw 118 rotating while feeder 170 works together with microprocessor 200 and hopper 122 to feed resin and additive into barrel 112 of screw 118 at a first selected rate. Rotation of screw 118 converts the resin- additive mixture into molten material; screw 118 then drives the molten material forward into space in front of screw 118 filling the space with molten material; pressure from the molten material in the space in front of screw 118 then causes screw 118 to retract longitudinally as it rotates. Screw rotation stops upon screw 118 retracting to a pre- selected position whereupon ram 124 drives screw 118 forward, to the left in Figure 3, thereby injecting molten material into mold 116 while concurrently feeding resin and additive at a second selected rate. Feeder 170 is preferably concurrently feeding additive and combining it with the resin at the second selected rate and supplying the resin- additive mixture into barrel 112 through throat 172.

It is desirable that the second rate of supply of the additive together with resin into barrel 112 through throat 172 during injection be at a second selected rate, which is desirably a continuously calculated percentage of the first rate, with such calculations being performed by microprocessor 200.

In another operational aspect of the invention, the invention provides a method for operating an injection molding machine for molding granular resin into solid parts where the machine includes barrel 112 having a throat 172 formed therein for resin feed into barrel 112 with a longitudinally movable, rotatable screw 118 resident within the barrel and a feeder 170 at the throat 172 providing additive to the resin coming from hopper 122. The method in this aspect of the invention proceeds by feeding the resin-additive mix into barrel 112 through throat 172, rotating screw 118 thereby converting granular resin and additive into molten material collecting at a mold end of barrel 112, while screw 118 retreats longitudinally due to force exerted on the screw by molten material collecting in barrel 112 at the mold end of barrel 112. The method proceeds by longitudinally advancing screw 118 thereby injecting molten material collected at the screw end into mold 116 where the longitudinal advancement is effectuated by application of high pressure hydraulic fluid to ram 124, thereby pushing ram 124 and screw 118 to the left in Figure 3, thereby injecting molten material collected at the opposite end of screw 118 into mold 116. The method then proceeds by optionally maintaining screw 118 at this longitudinally advanced position for sufficient time to allow at least some cooling of molten material in mold 116. In this practice of the invention, the invention proceeds with recording the time for performance of the step of rotating the screw 118 to convert granular resin material and additive into molten material while screw 118 retreats, determining the time for performance of the steps of longitudinally advancing screw 118 and optionally maintaining screw 118 at the longitudinally advanced position to allow some cooling of molten material in mold 116 and thereafter apportioning the amount of additive provided to the resin at the throat 172 according to the times determined for the screw rotation step, the screw longitudinal injection step and the screw maintenance at the injection position to allow cooling. In still another aspect of the method of the invention, feeder 170 is regulated to apportion the amounts of additive added to the resin during screw rotation and during screw advancement and optionally during the optional time for maintaining screw 118 at the longitudinally advanced post- injection position, to allow some cooling of the molten material in mold 116 where feeder 170 is regulated to apportion amounts of additive according to the times determined by measuring the steps of screw rotation, screw advancement, and optional screw position maintenance. In such performance of the method, microprocessor 200 has capability for measuring times for performance of these various steps of operation by screw 118, recording those measured times, and thereafter performing calculations using those times found in the course of operating screw 118.

While wireless communication between sensors 138 and 140 and microprocessor 200 is desirable, whether microprocessor 200 stands alone or is a part of feeder 170, hard wire communication is also within the scope of the invention and may be used. However, such hard wire communication has not been illustrated in Figure 3 to ensure drawing clarity.

In addition to Internet and Bluetooth communication, GPRS, EDGE, ZIGBEE, PICONET, or Zwave are all suitable communication protocols for effectuating communication wirelessly between sensors 138, 140, and microprocessor 200, no matter where microprocessor 200 is located.

While the Maguire MGF feeder is the preferred feeder to be used as feeder 170, which is a gravimetric feeder, the invention is applicable to any feeder mounted at the throat of an injection molding machine.

When the Maguire MGF feeder is used as feeder 170, the feeder can accept both "screw" and "injection" signals, and can apportion the additive, whether it be color or some other additive, over both time periods, namely over the injection time period and over the screw rotation time period.

It is within the scope of the invention to use an independent signal supplied by after-market supplier to tell microprocessor 200 or to control feeder 170 exactly when the screw is advancing during injection and when the screw stops, at full injection. That signal can be used in lieu of a signal generated by sensor 138 as illustrated in Figure 3. The invention may be practiced with any signal relating to injection time. The injection molding press circuitry itself, which provides an injection signal, or an injection timer, can be used to generate a suitable injection signal for use in practice of the invention. Similarly, a third-party, after-market device mounted on the injection molding press to provide the information as to injection time and to produce a signal regarding the same to be supplied to microprocessor 200, whether microprocessor 200 is mounted independently or part of feeder 170, provides adequate information for practice of the invention.

The invention does not depend on the type of signal. The invention can operate with any signal indicating injection and facilitating the provision of coordinated additive feeding over both injection and screw times, with resin and additive flowing together into the screw barrel.

As discussed above and from the foregoing description of the exemplary embodiments of the invention, it will be readily apparent to those skilled in the art to which the invention pertains that the principles and particularly the structures disclosed herein and the methods of use thereof can be used for applications other than those specifically mentioned. All such applications of the invention are intended to be covered by the appended claims unless expressly excluded therefrom.

The invention may be embodied in other specific forms without departing from the scope of the invention as set forth in the appended claims. The disclosed embodiments are therefore to be considered in all respects as illustrative and not restrictive with the scope of the invention being indicated by the appended claims rather than by the foregoing description. All changes which come within the meaning and range of equivalency of the claims are therefore intended to be embraced therein.

As used in the claims herein, the term "comprising" means "including" while the term "consisting of means "including so much and no more" and the term "consisting essentially of means including the recited elements and those minor accessories; exchanges and variations required as known in the art as being used to facilitate the invention as claimed. The scope of the invention is, therefore, indicated by the appended claims rather than by the foregoing description and all changes which come within the range of equivalency of the claims are to be considered to be embraced within the scope of the claims.

## Claims

1. An injection molding machine comprising:
a) a barrel (12);
b) a rotatable screw(18) residing within the barrel (12) and being longitudinally movable therewithin;
c) a liquid color pump (40) for furnishing liquid color to the screw (18) within the barrel (12);
**characterised by**
d) a transducer (38) for sensing position of the rotatable screw within the barrel and providing a signal indicative thereof; and
e) a processor (40) receiving the signal and controlling pump speed according to sensed position of the screw (18).

2. An injection molding machine as claimed in claim 1, wherein, during operating, the screw (18) is rotated during a first part of each operating cycle and moved longitudinally during a second part of the operating cycle, and wherein the processor (40) is configured to cause liquid color to be furnished to the injection molding machine barrel at a first rate during the first part of each cycle and at a second rate during the second part of each cycle..

3. An injection molding machine as claimed in claim 2, wherein the second rate is greater than the first rate.

4. An injection molding machine as claimed in any of claims 1 to 3, wherein communication between the transducer (38) and the processor (40) is wireless.

5. An injection molding machine for injection molding resin into plastic parts, comprising:
a) a barrel (112) having a throat (172) for resin feed into the barrel (112);
b) a rotatable, longitudinally movable screw (118) within the barrel (112);
c) a feeder (170) for providing additive to the resin at the throat,
**characterised by**
d) a first sensor (138) providing a signal indicative of screw rotation;
e) a second sensor (140) providing a signal indicative of screw longitudinal advancement injecting molten resin into a mold; and
f) a processor (200) configured to cause additive to be provided by the feeder (170) to the barrel (112) at a first rate in response to the first sensor signal and at a second rate during advancement of the screw in response to the second sensor signal.

6. An injection molding machine as claimed in claim 5, wherein the second sensor (140) provides a signal indicative of screw longitudinal advancement injecting molten resin into a mold and of screw position maintenance while molten resin is cooling in the mold.

7. An injection molding machine as claimed in claim 6, wherein the signal from the second sensor (140) is indicative of screw longitudinal advancement injecting molted resin into a mold and cessation of such advancement.

8. An injection molding machine as claimed in any one of claims 5 to 7, wherein communication between the transducers (138,140) and the processor (200) is wireless.
